# EUROPEAN PATENT SPECIFICATION

(11) **EP 2 031 867 B1**
(45) Date of publication and mention of the grant of the patent: **08.07.2015**
(21) Application number: 07075733.1
(22) Date of filing: 28.08.2007
(51) Int. Cl.: B25J 15/00, B25J 19/02, H04N 5/225

(54) **System and method of artificial viewing for robotised equipments**
System und Verfahren einer künstlichen Anzeige für automatisierte Vorrichtungen
Système et procédé d'affichage artificiel pour équipements robotisés

(43) Date of publication of application: 04.03.2009
(73) Proprietor: SIR S.p.A., 41122 Modena (IT)
(72) Inventor: Rappaz, Christian, 1890 St-Maurice/VS (CH)
(74) Representative: Brunacci, Marco

(56) References cited:
- EP-A- 0 274 328
- WO-A-95/34988
- WO-A-02/076090
- WO-A-03/077530
- US-A1- 2003 043 294
- US-A1- 2003 218 688
- US-A1- 2006 098 112

## Description

The present invention refers to a system and a method of artificial viewing for robotised equipments.

With special reference to the industrial sector, the use is known of robotised equipments, such as anthropomorphous robots, suitable for performing handling and process operations such as, for example, the picking up of products conveyed by belts and turntables or lying in cases and on pallets, the superficial, dimensional inspection and the correct assembly of the products or, again, the sorting of products.

For the execution of these and other operations, the use is also known of a system of artificial viewing generally composed of a viewing unit supported by a robotised equipment or in fixed position, connected to a computer of the personal computer type or the like.

The viewing unit comprises a device for lighting the work area and a camera linked to an image acquisition and processing device, commonly known as "frame grabber", installed on the computer.

The image acquisition and processing device uses, in general, different software packages suitable for processing the images acquired by the camera for performing specific functions such as, for example, the search for geometric shapes, contours or other faults, the identification of letters, the identification of codes, etc.

The known viewing systems do however have some drawbacks.

The known artificial viewing units are made using components existing on the market and cameras and lighting devices are assembled and configured so as to optimise the execution of a specific application.

In particular the lighting means are made so as to allow the diffusion of optimal light for a specific application and inside a precise work area.

Furthermore, the optimal lighting conditions inside the work areas are commonly achieved using several light sources suitably arranged and using screens able to isolate the work area from the light sources coming from the outside environment.

This makes the viewing unit hard to use for various types of applications, except after adapting it and after further configuration operations.

Furthermore, the software packages used by the image acquisition and processing device are dedicated to specific functions and must be combined to allow the execution of a specific operation by means of the robotised equipment.

It is also known, from patent document WO 02/076090 A1, a system suitable for increasing the dynamic range of image sensors, as a digital camera, by controlling the exposure, either electronically or mechanically, of multiple images, and by optionally forming a composite image from the properly exposed areas of the multiple images of varying exposure settings.

Still it is known, from patent document US 2006/098112 A1, an handheld digital camera comprising an image system suitable for aiding in generating creative, high-quality images, on a view-screen of the camera.

In particular, in this known digital camera, the respective image system is configured to provide a variety of overlays, each having prescribed attributes, e.g. ranging in size, opacity, and functionality, on the view-screen, in conjunction with image data corresponding to the field-of-view of the camera, whereby the attributes of the overlay, e.g. its opacity, affects the presentation of the image on the view-screen.However the embodiments known from the above two patent document do hot seem to be primarily directed to tackle and solve the specific problems, as before outlined, affecting the field of artificial viewing in robotised equipments.

It follows that also these known embodiments appear to request further improvements on this direction, especially in order to provide a rapid adaptation of the viewing devices to the effective operative condition in which the robotised equipment operates.

WO 95/34988 discloses a miniature camera that comprises a tubular housing inside which is seated the camera, a cap that is fixed to a door by means of a screw and to the housing by means of a bolt. This miniature camera also comprises an adjusting screw mounted at the lower part of the housing, and free to move with respect to the cap, that engages a projection to adjust the angle inclination of the lens assembly against a resilient bias of a resilient member. WO 03/077530 discloses a sensor assembly comprising a camera assembly which integrates a CCD-based camera, a support element for supporting the camera assembly, and a base element which is fixed to a mounting surface, as in particular a wall. The support element is movably coupled to the base element via a coupling mechanism allowing orientation, according to a plurality of degrees of freedom, of the support element and therefore also of the supported camera assembly.

The main aim of the present invention is to find a system and a method of artificial viewing for robotised equipments that can be used for applications of different types and inside different work areas.

Another object of the present invention is to find a system and a method of artificial viewing for robotised equipments that can be used whatever the light environmental conditions outside the work area.

Another object of the present invention is to find a system and a method of artificial viewing for robotised equipments that permits overcoming the above drawbacks of prior art as part of a simple, national solution, that is easy and effective to use and of low cost.

The above objects are all achieved by the system of artificial viewing for robotised equipments, comprising all the features recited by independent claim 1.

Further characteristics and advantages of the present invention will appear even more evident from the description of a preferred, but not exclusive, embodiment of a systen and a method of artificial viewing for robotised equipments, illustrated indicatively by way of non limiting example, in the attached drawings wherein:

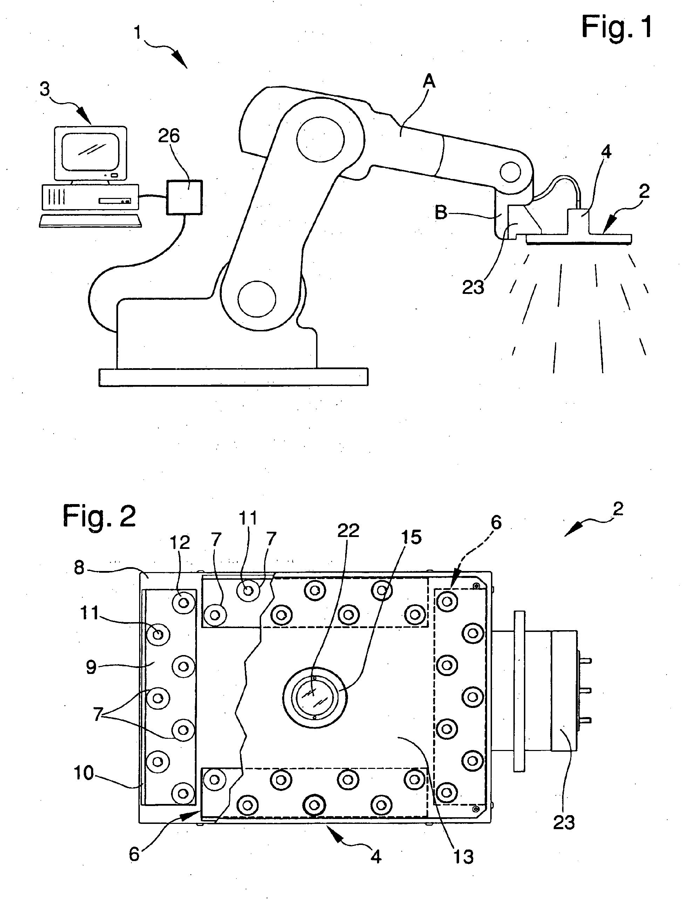

the figure 1 is a side and schematic view of the system according to the invention associated with a generic robotised equipment;
the figure 2 is a front, partially sectioned view, of the viewing unit of the system according to the invention;
the figure 3 is a side and section view of the viewing unit of the system according to the invention;
the figure 4 is an axonometric view of a part of the lighting means of the viewing system according to the invention;
the figure 5 is a rear view of the viewing unit of the system according to the invention;
the figure 6 is a general operating diagram of the system according to the invention.

With particular reference to such illustrations, globally indicated by 1 is a system of artificial viewing for robotised equipments, particularly of the type that can be used for industrial applications such as, for example, the picking up of products conveyed by belts and turntables or lying in cases and on pallets, the superficial, dimensional inspection and the correct assembly of the products or, again, the sorting of products.

The system 1 comprises a viewing unit 2, associable with a robotised equipment A, of the anthropomorphous robot type or the like, and suitable for acquiring at least one image of a product inside a work area.

The fitting cannot however be ruled out of the viewing unit 2 in fixed position inside the work area of a robotised equipment A.

The system 1 also comprises a management and control unit 3 of the acquired image which is connected to the viewing unit 2. The management and control unit 3 is of the type of a microprocessor system and can be made up, for example, of a high-performance personal computer.

Advantageously, the viewing unit 2 comprises a structure 4 for supporting at least one camera 5 and lighting means 6 for lighting the work area.

With particular but not exclusive reference to the form of implementation of the invention shown in the figures from 1 to 5, the lighting means 6 comprise a plurality of light emission devices 7 distributed according to a predefined pattern on a substantially rectangular plate-shaped portion 8 of the structure 4.

In particular, the light emission devices 7 are distributed spaced out the one from the other near the edge of the plate-shaped portion 8 and along all the perimeter, and this predefined pattern is aimed at obtaining diffused and constant lighting both at the centre and at the edges of the acquired image. Different arrangements of the light emission devices 7 cannot however be ruled out.

Usefully, the lighting means 6 comprise adjustment means for adjusting the light diffusion inside the work area, made up of variation means for varying the position of at least one of the light emission devices 7, so as to allow the adaptation of the viewing unit 2 for the optimal and uniform diffusion of the light inside different work areas and for different types of application.

In particular, the lighting means 6 comprise four plate-shaped bases 9 that support respective light emission device units 7.

Advantageously, each of the bases 9 is made up of a printed circuit for the power connection and support of each of the light emission devices 7. Each of the printed circuits 9 is without intermediate wiring harnesses and has a suitable port that can be connected to the power line on the viewing unit 2.

The use of printed circuits 9 permits speeding up the assembly and replacement of the light emission devices 7 and making an extremely modular solution adaptable to different applications of the viewing unit 2.

Each of the bases 9 has a flexible lamina 10 along one side associated near one of the edges of the plate-shaped portion 8 of the structure 2. The bending of the lamina 10 permits the rotation of the base 9 by a predetermined angle of between, for example, 0° and 10° with respect to the position of the plane defined by the plate-shaped portion 8.

The above variation means for varying the position can be made up of a manual calibration device for calibrating the angle of each base 9 with respect to the plate-shaped portion 8.

Such calibration device can be made up, for example, of one or more suitable setscrews fitted between the inner side of the base 9 and the plate-shaped portion 8 and equipped with respective counter-bolts. The tightening and the opening of the setscrews require the rotation of the base 9 with respect to the position of the plane defined by the plate-shaped portion 8.

Alternatively, automated calibration cannot be ruled out by means of special actuators of the rotation of each base 9.

Usefully, each of the light emission devices 7 comprises a light emitting diode (LED) 11 for the emission of light in the infrared spectrum. Particularly, the use of infrared emission diodes 11 permits a greater independence from the environmental light conditions inside the work area, less problems of light refraction on reflecting areas, better contrast, distribution and diffusion of the light, as well as lower consumption of electricity and a longer life compared to other commonly used lighting devices. Alternatively, the use cannot be ruled out of diodes for the emission of light in the white, red or almost infrared light spectrum.

Advantageously, each of the light emission devices 7 comprises a lens 12 suitable for permitting a greater diffusion and uniformity of the emitted light.

Usefully, the structure 4 comprises a front cover 13, substantially plate-shaped and having a plurality of holes arranged in line with the light emission devices 7.

The structure 4 also comprises a compartment 14 for housing the camera 5, defined by a protection cylinder 15 associated with the plate-shaped portion 8.

Particularly, the protection cylinder 15 is partially fitted to measure inside a central opening on the plate-shaped portion 8 and the longitudinal axis of the protection cylinder 15 is substantially at right angles with respect to the position of the plane of the plate-shaped portion 8. A suitable round crown embraces the protection cylinder 15 and permits fixing this to the plate-shaped portion 8 by means of the three screws arranged at a substantially equal distance the one from the other. Usefully, the screws can engage inside respective slots on the plate-shaped portion 8 for the fine adjustment of the rotation of the protection cylinder 15.

The protection cylinder 15 comprises a front opening 16, in line with which is positioned the lens of the camera 5, and a closing plate 17 of the compartment 14, arranged at the rear and provided with a connector 18 for wiring up the camera 5.

From the closing plate 17, inside the compartment 14, extends an anchoring support 19 of the camera 5 substantially plate-shaped.

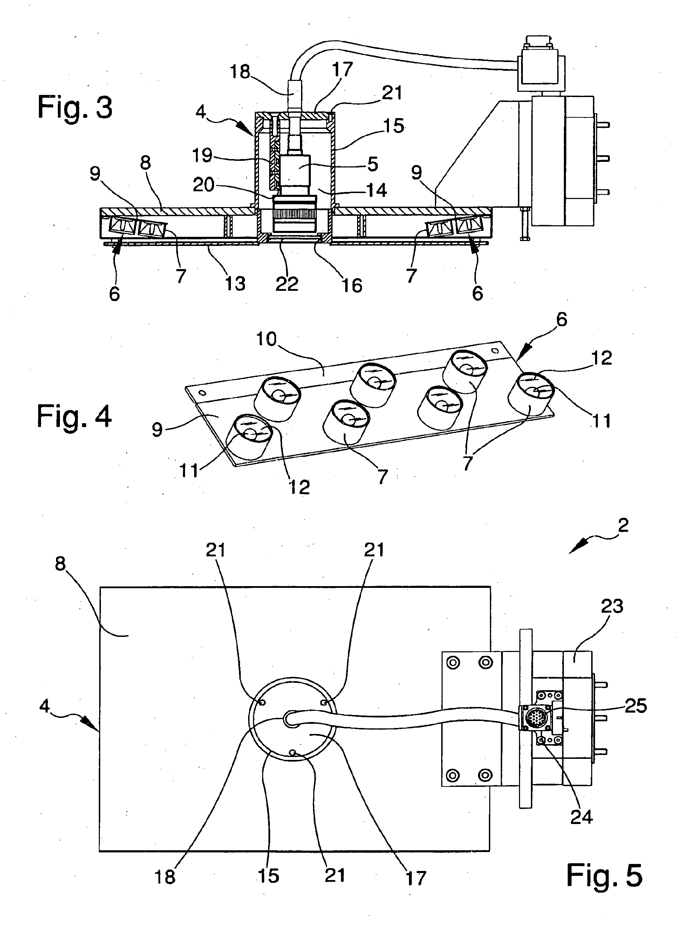

Advantageously, between the anchoring support 19 and the camera 5 at least one layer 20 of insulating electromagnetic material is placed that, in the specific embodiment of the invention and as shown in figure 3, is made up of a bakelite insulating plate.

The closing plate 17 is fixed to the protection cylinder 15 by means of threaded type means 21. Particularly, such threaded type means 21 comprise three dowels that permit the accurate adjustment of the slant of the closing plate with respect to the body of the protection cylinder 15 and, consequently, permit the accurate adjustment of the slant of the camera 5 for a correct acquisition of the images. The threaded type means 21 also comprise three tightening screws for suitably fastening the dowels.

An opportune optical filter 22 can be fixed to the structure 4, at the front opening 16, and can be composed, for example, of an infrared filter in case of use of diodes 11 for the emission of light in the infrared spectrum.

Advantageously, the viewing unit 2 comprises quick coupling and release means 23 to and from a robotised equipment A.

The quick coupling and release means 23 comprise a first connector 24, having electric contacts 25 for supplying the lighting means 6 and connecting the camera 5 for the transmission/reception of opportune video signals. The connector 24 can be mechanically and electronically coupled with a complementary second connector B on the robotised equipment A.

The presence of the quick coupling and release means 23 permits parking the viewing unit 2 at the end of the image acquisition operation, for using the robotised equipment A for different process operations.

The management and control unit 3 comprises an interface device 26 connected to the viewing unit 2, in particular to the camera 5, and suitable for image acquisition and processing.

Particularly, the interface device 26 can be composed of a board installable on the management and control unit 3, of the type commonly known as "frame grabber".

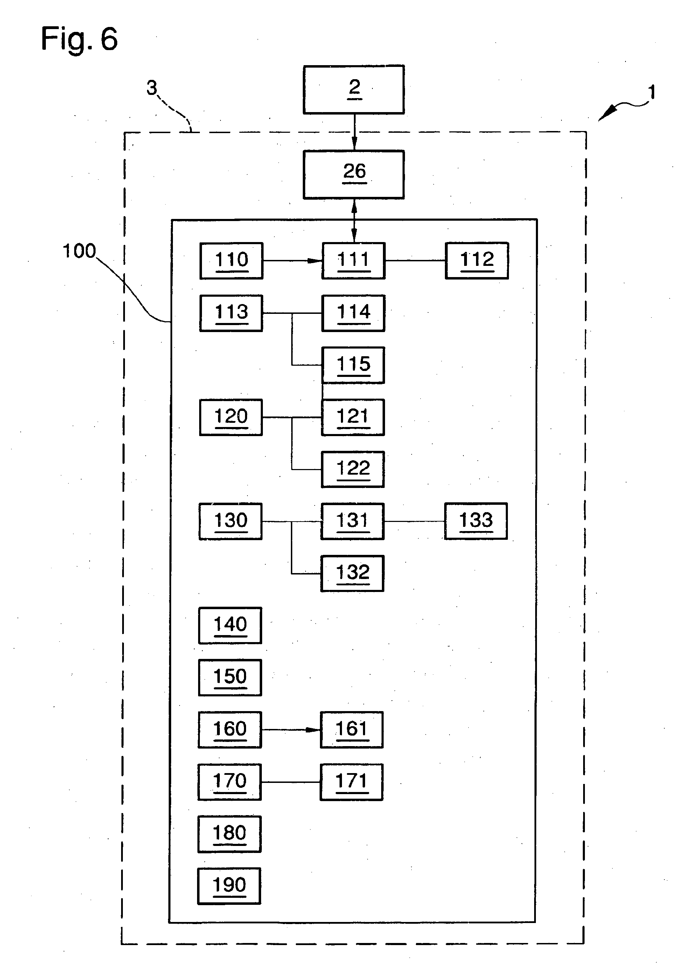

Usefully, the interface device 26 uses a single application software, schematically indicated in figure 6 with the reference 100, installed on the management and control unit 3 and suitable for processing the images acquired for the execution of one or more different applications of the robotised equipment A.

Advantageously, the management and control unit 3, in particular the application software 100 installed on it, comprises detection means 110 for detecting the intensity of the light inside the work area, of the type of an exposure meter software or the like, and dynamic correction means 111 for correcting the image light parameters to be acquired starting from the intensity of the light detected, where by light parameters is meant the light intensity, the contrast and the exposure of the image.

Particularly, the dynamic correction means 111 comprise comparison means 112 for comparing the light parameters of an image acquired by means of the camera 5 with the light parameters of a predefined reference image. In the event of the difference found between the acquired image and the predefined image exceeding a specific threshold, then the light intensity, contrast and exposure parameters are corrected before the next acquisition.

The use of the comparison means 112 and the subsequent correction of the light parameters allows the optimal balance of the image even in the case of variations of up to 70% in the environmental light conditions inside the work area.

The application software 100 can also comprise reconstruction means 113 for reconstructing a final image with optimal light parameters of a product and/or of a work area obtained starting from a plurality of initial images of such product and/or such work area. Such initial images are acquired by increasing by a predefined quantity (at each acquisition) the light intensity, contrast and exposure parameters.

In particular, the reconstruction means 113 comprise selection means 114 suitable for examining all the initial images acquired and selecting from each of them the parts of the product and/or the work area considered best in terms of light intensity, contrast and exposure, and joining means 115 suitable for combining together the parts thus obtained to define the above final image.

The use of the reconstruction means 113 permits obtaining a final image with optimal balance including in the case of variations above 70% in the environmental light conditions inside the work area.

Usefully, the application software 100 can have first guide means of a robotised equipment A in two-dimensional conditions, generically indicated in figure 6 with the reference 120, and usable, for example, for picking up and arranging products arranged on a defined plane by a conveyor belt, by a turntable or the like.

In particular, the first guide means 120 comprise first recognition means 121 of the geometric type for recognising the type and/or the position of a plurality of products arranged on the plane, starting from a two-dimensional acquired image, and first determination means 122 for determining the coordinates of at least one of the products to be picked up and arranged by means of a robotised equipment A.

Usefully, the application software 100 can have second guide means of a robotised equipment A in three-dimensional conditions, generically indicated in figure 6 with the reference 130, and usable, for example, for picking up and arranging products arranged inside a case, on a pallet or the like.

In particular, the second guide means 130 comprise second recognition means 131 of the geometric type for recognising the type and/or position of a plurality of products arranged inside a case, on a pallet or the like, starting from a three-dimensional image, and second determination means 132 for determining the coordinates of at least one of the products to be picked up and arranged by means of a robotised equipment A.

The second recognition means 131 comprise definition means 133 for defining the above three-dimensional image starting from at least two acquired two-dimensional images of the products.

Usefully, the application software 100 can comprise the use of the first and second recognition means 121 and 131, in order to identify the products belonging to the same family, but which have substantial variations in shape (e.g., products or semi-finished products in different states of finish) or superficial aspect (products with different colour within the same family).

Advantageously, the application software 100 can include checking means 140 for checking the overall dimensions inside the work area during the pickup of the products using the robotised equipment A.

The checking means 140 comprise methods for individualizing shapes not defined a priori and possibly present inside the work area, in order to ensure the absence of collisions during the pick up phase of a product using the robotised equipment A. These individuation methods can be of different type depending on the particular geometric shape of the pickup body of the robotised equipment A.

Usefully, the application software 100 can comprise realisation means 150 for making a high-resolution final image of a product and/or of a work area starting from a series of acquired images of particular and different portions of such product and/or work area. This permits acquiring high-resolution images of products with dimensions above conventional dimensions and of large work areas. High-resolution final images can be made by interfacing the partial images close to their edge points, or else superimposing the single partial images of known measurement.

The application software 100 can also comprise individuation means 160 for identifying at least one profile of a product to be worked and starting from an image acquired by means of the viewing unit 2, and generation means 161 for generating at least one path of a robotised equipment A for working the above profile.

Advantageously, the application software 100 can comprise quality inspection means 170 for inspecting the surface and dimensional quality and the correct assembly of the products and detection and identification means 180 for detecting and identifying codes, characters or the like on the product, starting from one or more acquired images.

In particular, the quality inspection means 170 comprise automatic and dynamic masking means 171 suitable for eliminating from the acquired image, before inspection and in an automatic way, the area outside the surface surround (rough parts of product) and all the areas not envisaged by the surface control (such as rough parts and holes).

The application software 100 can comprise control means 190 for controlling the presence or absence of residual objects inside the work area.

The method of artificial viewing for robotised equipments comprises a first phase of acquisition of at least one image of a product inside the work area by means of the camera 5 of the viewing unit 2, and a subsequent processing phase of the acquired image.

Advantageously, the processing phase envisages all the different functions necessary to carry out different applications of a robotised equipment A.

In particular, the processing phase comprises detecting the intensity of the light inside the work area by means of the detections means 110 and dynamically correcting the light parameters of said image starting from said detected light intensity and by means of the dynamic correction means 111.

The dynamic correction involves the comparison, by means of the comparison means 112, of the light parameters of the acquired image and the light parameters of a predefined reference image.

The method can also comprise the acquisition of a plurality of images of a product and/or of a work area obtained by varying the respective light parameters.

In this case, the processing implies the reconstruction, by means of the reconstruction means 113, of a final image of the product and/or the work area with optimal light parameters. Such final image is obtained by selecting, from among the above plurality of images, the parts of the product and/or of the work area with optimal light parameters and then joining the parts thus selected.

The processing phase can comprise a first guide phase of a robotised equipment A in two-dimensional conditions, by means of the first guide means 120, particularly for picking up and arranging products arranged on the plane defined by a conveyor belt, by a turntable or the like.

The first guide phase comprises a first phase of recognition of the type and/or the position of a plurality of products on a plane, starting from an acquired two-dimensional image, and a first phase of determination of the coordinates of at least one of the products to be picked up and arranged by means of a robotised equipment A.

The processing phase can also comprise a second guide phase of a robotised equipment A in three-dimensional conditions, by means of the second guide means 130, particularly for picking up and arranging products arranged inside a case, on a pallet or the like.

The second guide phase comprises a second phase of recognition of the type and/or the position of a plurality of products arranged inside a case, on a pallet or the like, starting from a three-dimensional image, and a second phase of determination of the coordinates of at least one of the products to be picked up and arranged by means of a robotised equipment A.

In particular, the second phase of recognition involves the definition of the above three-dimensional image starting from at least two acquired two-dimensional images of the plurality of products to be arranged.

Advantageously, the processing phase can comprise the realisation of a final high-resolution image of a product and/or a work area starting from a plurality of acquired images relating to different parts of the product and/or the work area.

Usefully, the processing phase can comprise the individuation of at least one profile to be worked of a product starting from an acquired image and the generation of at least one path of the robotised equipment A to work the profile thus individualized.

The processing phase can also comprise one or more superficial and dimensions quality inspection phases and of correct assembly of a product starting from at least one acquired image.

Advantageously, the quality inspection phase comprises the automatic and dynamic masking of the acquired image for the elimination from the image of the area outside the contour of the surface of the product and of all the areas not involved in the superficial control.

The processing phase can also comprise the detection and the identification of the codes, characters or the like present on the product, detected starting from an acquired image.

The processing phase can comprise the verification of the overall dimensions inside the work area during pickup of products by means of a robotised equipment A and starting from at least one acquired image.

The processing phase can also comprise the control of the presence of residual objects inside the work area starting from at least one acquired image.

It has in practice been found how the described invention achieves the proposed objects and in particular the fact is underlined that the above-described system and method of artificial viewing can be used for applications of different type and inside different work areas.

In particular, the particular lighting means of the viewing unit, together with the dynamic correction means of the lighting parameters, permit the use of the system whatever the environmental light conditions outside the work area.

The invention thus conceived is susceptible of numerous modifications and variations, all of which falling within the scope of the inventive concept.

Furthermore all the details may be replaced by other elements which are technically equivalent.

In practice, the contingent shapes and dimensions may be any according to requirements without because of this moving outside the protection scope of the following claims.

## Claims

1. System. (1) of artificial viewing for robotised equipments, comprising at least one viewing unit (2) comprising at least one camera (5), the viewing unit (2) being associable with a robotised equipment (A) and suitable for acquiring at least one image of a product inside a work area, and at least one management and control unit (3, 100) associated with said viewing unit and suitable for processing said acquired image,
wherein said management and control unit (3, 100) comprises detection means (111) for detecting light intensity inside said work area and dynamic correction means (111, 112) for correcting the light parameters of said image starting from said detected light intensity,
wherein said viewing unit (2) comprises quick coupling and release means (23) to and from said robotised equipment (A) comprising at least one first connector (24), having electric contacts (25) that are mechanically and electronically connectable with at least one complementary second connector (B) arranged on said robotised equipment (A),
**characterized in that** said viewing unit (2) comprises
a support structure (4), for supporting said at least one camera (5), having at least one housing compartment (14) for housing said camera (5) and a substantially plate-shaped portion (8), with said housing compartment (14) being defined by a protection cylinder (15) associated with said substantially plate-shaped portion (8) and comprising at least one closing plate (17) of said compartment (14),
wherein said protection cylinder (15) comprises at least one anchoring support (19) of said camera (5) which extends inside said compartment (14) from said closing plate (17), and said closing plate (17) is fixed to said protection cylinder (15) by means of threaded type means (21) for the accurate adjustment of the slant of said closing plate (17) with respect to the body of the protection cylinder (15) and, consequently, for the accurate adjustment of the slant of the camera (5) for a correct acquisition of the images, and
wherein said viewing unit (2) comprises at least one layer (20) of insulating electromagnetic material which is placed in between said anchoring support (19) and said camera (5).

2. System (1) according to claim 1, **characterized in that** said dynamic correlation means (111, 112) comprise comparison means (112) for comparing the light parameters of said acquired image with the light parameters of a predefined reference image.

3. System according to one or more of the preceding claims, **characterized in that** said management and control unit (3, 100) comprises reconstruction means (113, 114, 115) for reconstructing a final image with optimal light parameters of a product and/or of a work area starting from a plurality of images of said product and/or said work area acquired by varying said light parameters.

4. System according to claim 3, **characterized in that** said reconstruction means (113, 114, 115) comprise selection means (114) between said plurality of images of the parts of said product and/or said work area with optimal light parameters and joining means (115) of said parts selected to define said final image.

5. System according to one or more of the preceding claims, **characterized in that** said light parameters comprise at least one between light intensity, contrast and exposure.

6. System according to one or more of the preceding claims, **characterized in that** said detection means are of the type of an exposure meter software or the like.

7. System according to one or more of the preceding claims, **characterized in that** said viewing unit comprises lighting means (6) for lighting said work area.

8. System according to claim 7, **characterized in that** said lighting means (6) comprise a plurality of light emission devices (7) distributed according to a redefined pattern on said substantially plate-shaped portion (8) of said support structure (4).

9. System (1) according to claim 7 or 8, **characterized in that** said lighting means (6) comprise adjustment means for adjusting the light diffusion inside said work area.

10. System according to claim 9, as dependent on claim 8, **characterized in that** said adjustment means for adjusting the light diffusion comprise variation means for varying the position of at least one of said light emission devices (7).

11. System according to claim 9 or 10, as dependent on claims 8, **characterized in that** said lighting means (6) comprise at least one substantially plate-shaped base (9) for supporting at least one of said light emission devices (7) and associated with said support structure (2) which can rotate by a predetermined angle.

12. System (1) according to claim 11, as dependent on claim 10, **characterized in that** said variation means, for varying the position of at least one of said light emission devices (7), comprise at least one manual calibration device for calibrating the angle of rotation of said plate-shaped base (9).

13. System according to one or more of the preceding claims, as dependent on claim 8, **characterized in that** at least one of said light emission devices (7) comprises a diode (11) for the emission of light or the like.

14. System according to claim 13, **characterized in that** said (11) diode is of infrared emission.

15. System according to one or more of the preceding claims, as dependent on claim 8, **characterized in that** at least one of said light emission devices (7) comprises at least one diffusion lens (12) of the emitted light.

16. System (1) according to claim 11, **characterized in that** said plate-shaped base (9) comprises at least one printed circuit for the power connection and support of a plurality of light emission diodes (11).

17. System according to claim 1, **characterized in that** said housing compartment (14) comprises at least one front opening (16) in line with which there are positioned the lens of said camera (5).

18. System according to claim 17, **characterized in that** said viewing unit (2) comprises at least one optical filter (22) arranged at said front opening (16).

19. System according to one or more of the preceding claims, **characterized in that** said layer (20) is made of bakelite or the like.

20. System according to one or more of the preceding claims, as dependent on claim 8, **characterized in that** said protection cylinder (15) of said camera (5) is substantially at right angles with respect to the plane of said plate-shaped portion (8) of the support structure (4).

21. System according to one or more of the preceding claims, **characterized in that** said accurate adjustment means are of the threaded type and comprise at least three dowels (21).

22. System according to claim 21, **characterized in that** said accurate adjustment means of the threaded type means comprise at least three thightening screws for fastening said dowels (21).

23. System according to one or more of the preceding claims, **characterized in that** said management and control unit (3) comprises at least one interface device (26) with said viewing unit (2) and suitable for image acquisition and processing.

24. System according to one or more of the preceding claims, **characterized in that** said management and control unit (3) is of the type of a microprocessor system.

25. System according to one or more of the preceding claims, **characterized in that** said management and control unit (3) comprises first recognition means (121) for recognising the type and/or the position of a plurality of products on a plane, starting from a two-dimensional acquired image, and first determination means (122) for determining the coordinates of at least one of said products to be picked up and arranged by means of a the robotised equipment (A).

26. System according to claim 25, **characterized in that** said management and control unit (3) comprises second recognition means (131) for recognising the type and/or position of a plurality of products arranged inside a case, on a pallet or the like, starting from a three-dimensional image, and second determination means (132) for determining the coordinates of at least one of said products to be picked up and arranged by means of a the robotised equipment (A).

27. System according to claim 26, **characterized in that** said second recognition means (131) comprise definition means (133) of said three-dimensional image starting from at least two acquired two-dimensional images of said plurality of products.

28. System according to claim 27, **characterized in that** at least one between said first and said second recognition means (121, 131) comprise identification means of products belonging to the same family, but which have substantial variations in shape or superficial aspect.

29. System according to one or more of the preceding claims, **characterized in that** said management and control unit (3, 100) comprises realisation means (150) for making a high-resolution final image of a product and/or of a work area starting from a plurality of acquired images of different parts of said product and/or of said work area.

30. System according to one or more of the preceding claims, **characterized in that** said management and control unit (3, 100) comprises individuation means (160) of at least one profile of said product to be worked starting from said acquired image and generation means of at least one path of said robotised equipment (A) for working said profile.

31. System according to one or more of the preceding claims, **characterized in that** said management and control unit (3, 100) comprises quality inspection means (170) for inspecting the surface and dimensional quality and the correct assembly of said product starting from said acquired image.

32. System according to claim 31, **characterized in that** said quality inspection means (170) comprise automatic and dynamic masking means (171) of said acquired image suitable for eliminating from the image the area outside the surface surround of said product and of all the areas not envisaged by the surface control.

33. System according to one or more of the preceding claims, **characterized in that** said management and control unit (3, 100) comprises detection and identification means (180) of codes, characters or the like on said product starting from said acquired images.

34. System according to one or more of the preceding claims, **characterized in that** said management and control unit (3, 100) comprises checking means (140) of the overall dimensions inside said work area during the pickup of the products using a robotised equipment and starting from at least one acquired image.

35. System according to one or more of the preceding claims, **characterized in that** said management and control unit (3) comprises control means (190) of the presence of residual objects inside said work area starting from at least one acquired image.

36. A robotised system (A, 1, 3) including a robotised equipment (A) and a system (1) of artificial viewing according to any one of the preceding claims.

## Patentansprüche

1. System (1) zum künstlichen Sehen für robotisierte Ausrüstungen, das mindestens eine Betrachtungseinheit (2) umfasst, welche mindestens eine Kamera (5) umfasst, wobei die Betrachtungseinheit (2) mit einer robotisierten Ausrüstung (A) verbindbar und geeignet ist, mindestens ein Bild eines Produktes innerhalb eines Arbeitsbereichs zu erlangen, und mindestens eine Management- und Steuer- und Regeleinheit (3, 100), die mit der Betrachtungseinheit verbunden und geeignet ist, das erlangte Bild zu verarbeiten,
wobei die Management- und Steuer- und Regeleinheit (3, 100) Erkennungsmittel (111) zum Erkennen der Lichtstärke innerhalb des Arbeitsbereichs und dynamische Korrekturmittel (111, 112) zur Korrektur der Lichtparameter des Bildes beginnend von der erkannten Lichtstärke umfasst,
wobei die Betrachtungseinheit (2) Schnellkopplungs- und Entkopplungsmittel (23) zu und von der robotisierten Ausrüstung (A) umfasst, die mindestens einen ersten Anschluss (24) umfassen, der elektrische Kontakte (25) aufweist, die mechanisch und elektronisch mit mindestens einem komplementären zweiten Anschluss (B) verbindbar sind, der an der robotisierten Ausrüstung (A) angeordnet ist,
**dadurch gekennzeichnet, dass** die Betrachtungseinheit (2) umfasst
eine Tragstruktur (4) zum Tragen der mindestens einen Kamera (5), die mindestens eine Gehäusekammer (14) zum Aufnehmen der Kamera (5) und einen im Wesentlichen plattenförmigen Abschnitt (8) aufweist, wobei die Gehäusekammer (14) durch einen Schutzzylinder (15), der mit dem im Wesentlichen tellerförmigen Abschnitt (8) verbunden ist, definiert ist und mindestens eine Verschlussplatte (17) der Kammer (14) umfasst,
wobei der Schutzzylinder (15) mindestens eine Verankerungsstütze (19) der Kamera (5) umfasst, die sich von der Verschlussplatte (17) in die Kammer (14) erstreckt, und wobei die Verschlussplatte (17) an dem Schutzzylinder (15) mittels Gewindemitteln (21) zur korrekten Anpassung der Neigung der Verschlussplatte (17) in Bezug auf den Körper des Schutzzylinders (15) und daher zur korrekten Anpassung der Neigung der Kamera (5) für eine korrekte Erfassung der Bilder befestigt ist, und
wobei die Betrachtungseinheit (2) mindestens eine Schicht (20) aus isolierendem elektromagnetischem Material umfasst, die zwischen der Verankerungsstütze (19) und der Kamera (5) angeordnet ist.

2. System (1) nach Anspruch 1, **dadurch gekennzeichnet, dass** die dynamischen Korrekturmittel (111, 112) Vergleichsmittel (112) zum Vergleichen der Lichtparameter des erlangten Bildes mit den Lichtparametern eines vordefinierten Referenzbildes umfassen.

3. System nach einem oder mehreren der vorhergehenden Ansprüche, **dadurch gekennzeichnet, dass** die Management- und Steuer- und Regeleinheit (3, 100) Rekonstruktionsmittel (113, 114, 115) zum Rekonstruieren eines endgültigen Bildes mit optimalen Lichtparametern eines Produktes und/oder eines Arbeitsbereichs beginnend von mehreren Bildern des Produktes und/oder des Arbeitsbereichs, die durch Variieren der Lichtparameter erlangt wurden, umfasst.

4. System nach Anspruch 3, **dadurch gekennzeichnet, dass** die Rekonstruktionsmittel (113, 114, 115) Auswahlmittel (114) zwischen den Vielzahl von Bildern der Teile des Produktes und/oder des Arbeitsbereichs mit optimalen Lichtparametern und Verbindungsmittel (115) der Teile, die ausgewählt wurden, um das endgültige Bild zu definieren, umfassen.

5. System nach einem oder mehreren der vorhergehenden Ansprüche **dadurch gekennzeichnet, dass** die Lichtparameter mindestens eines aus Lichtstärke, Kontrast und Belichtung umfassen.

6. System nach einem oder mehreren der vorhergehenden Ansprüche **dadurch gekennzeichnet, dass** die Erkennungsmittel vom Typ einer Belichtungsmessersoftware oder dergleichen sind.

7. System nach einem oder mehreren der vorhergehenden Ansprüche **dadurch gekennzeichnet, dass** die Betrachtungseinheit Beleuchtungsmittel (6) zum Beleuchten des Arbeitsbereichs umfasst.

8. System nach Anspruch 7, **dadurch gekennzeichnet, dass** die Beleuchtungsmittel (6) mehrere Lichtemissionsgeräte (7) umfassen, die gemäß einem vordefinierten Muster auf dem im Wesentlichen plattenförmigen Abschnitt (8) der Tragstruktur (4) verteilt sind.

9. System (1) nach Anspruch 7 oder 8, **dadurch gekennzeichnet, dass** die Beleuchtungsmittel (6) Anpassungsmittel zum Anpassen der Lichtdurchlässigkeit innerhalb des Arbeitsbereichs umfassen.

10. System nach Anspruch 9, wie abhängig von Anspruch 8, **dadurch gekennzeichnet, dass** die Anpassungsmittel zum Anpassen der Lichtdurchlässigkeit Variationsmittel zum Variieren der Position von mindestens einem der Lichtemissionsgeräte (7) umfassen.

11. System nach Anspruch 9 oder 10, wie abhängig von Anspruch 8, **dadurch gekennzeichnet, dass** die Beleuchtungsmittel (6) mindestens eine im Wesentlichen plattenförmige Basis (9) zum Tragen von mindestens einem der Lichtemissionsgeräte (7) umfassen und mit der Tragstruktur (2), die sich um einen vorbestimmten Winkel drehen kann, verbunden sind.

12. System (1) nach Anspruch 11, wie abhängig von Anspruch 10, **dadurch gekennzeichnet, dass** die Variationsmittel zum Variieren der Position von mindestens einem der Lichtemissionsgeräte (7) mindestens ein manuelles Kalibriergerät zum Kalibrieren des Drehwinkels der plattenförmigen Basis (9) umfassen.

13. System nach einem oder mehreren der vorhergehenden Ansprüche, wie abhängig von Anspruch 8, **dadurch gekennzeichnet, dass** mindestens eines der Lichtemissionsgeräte (7) eine Diode (11) zur Emission von Licht oder dergleichen umfasst.

14. System nach Anspruch 13, **dadurch gekennzeichnet, dass** die Diode (11) von Infrarotstrahlung ist.

15. System nach einem oder mehreren der vorhergehenden Ansprüche, wie abhängig von Anspruch 8, **dadurch gekennzeichnet, dass** mindestens eines der Lichtemissionsgeräte (7) mindestens eine Streulinse (12) des emittierten Lichtes umfasst.

16. System (1) nach Anspruch 11, **dadurch gekennzeichnet, dass** die plattenförmige Basis (9) mindestens eine Leiterplatte für den Stromanschluss und zum Tragen von mehreren Leuchtdioden (11) umfasst.

17. System nach Anspruch 1, **dadurch gekennzeichnet, dass** die Gehäusekammer (14) mindestens eine vordere Öffnung (16) umfasst, mit der ausgerichtet die Linse der Kamera (5) positioniert ist.

18. System nach Anspruch 17, **dadurch gekennzeichnet, dass** die Betrachtungseinheit (2) mindestens ein optisches Filter (22) umfasst, das an der vorderen Öffnung (16) angeordnet ist.

19. System nach einem oder mehreren der vorhergehenden Ansprüche, **dadurch gekennzeichnet, dass** die Schicht (20) aus Bakelit oder dergleichen hergestellt ist.

20. System nach einem oder mehreren der vorhergehenden Ansprüche, wie abhängig von Anspruch 8, **dadurch gekennzeichnet, dass** der Schutzzylinder (15) der Kamera (5) im Wesentlichen rechtwinklig in Bezug auf die Ebene des plattenförmigen Abschnitts (8) der Tragstruktur (4) ist.

21. System nach einem oder mehreren der vorhergehenden Ansprüche, **dadurch gekennzeichnet, dass** die Mittel zur korrekten Anpassung vom mit einem Gewinde versehenen Typ sind und mindestens drei Stifte (21) umfassen.

22. System nach Anspruch 21, **dadurch gekennzeichnet, dass** die Mittel zur korrekten Anpassung des mit einem Gewinde versehenen Typs mindestens drei Befestigungsschrauben zum Befestigen der Stifte (21) umfassen.

23. System nach einem oder mehreren der vorhergehenden Ansprüche, **dadurch gekennzeichnet, dass** die Management- und Steuer- und Regeleinheit (3) mindestens ein Schnittstellengerät (26) mit der Betrachtungseinheit (2) umfasst und für die Bildaufnahme und -verarbeitung geeignet ist.

24. System nach einem oder mehreren der vorhergehenden Ansprüche, **dadurch gekennzeichnet, dass** die Management- und Steuer- und Regeleinheit (3) vom Typ eines Mikroprozessorsystems ist.

25. System nach einem oder mehreren der vorhergehenden Ansprüche, **dadurch gekennzeichnet, dass** die Management- und Steuer- und Regeleinheit (3) erste Erkennungsmittel (121) zum Erkennen des Typs und/oder der Position von einer Vielzahl von Produkten auf einer Ebene umfasst, beginnend von einem zweidimensionalen erlangten Bild, und erste Bestimmungsmittel (122) zum Bestimmen der Koordinaten von mindestens einem der Produkte, die mittels der robotisierten Ausrüstung (A) aufgenommen und angeordnet werden sollen.

26. System nach Anspruch 25, **dadurch gekennzeichnet, dass** die Management- und Steuer- und Regeleinheit (3) zweite Erkennungsmittel (131) zum Erkennen des Typs und/oder der Position von einer Vielzahl von Produkten umfasst, die innerhalb eines Gehäuses auf einer Palette oder dergleichen angeordnet sind, beginnend von einem dreidimensionalen Bild, und zweite Bestimmungsmittel (132) zum Bestimmen der Koordinaten von mindestens einem der Produkte, die mittels der robotisierten Ausrüstung (A) aufgenommen und angeordnet werden sollen.

27. System nach Anspruch 26, **dadurch gekennzeichnet, dass** die zweiten Erkennungsmittel (131) Definitionsmittel (133) des dreidimensionalen Bildes umfassen, beginnend von mindestens zwei erlangten zweidimensionalen Bildern der mehreren Produkte.

28. System nach Anspruch 27, **dadurch gekennzeichnet, dass** mindestens eines aus den ersten und zweiten Erkennungsmitteln (121, 131) Identifikationsmittel von Produkten umfassen, die zur gleichen Familie gehören, aber wesentliche Unterschiede in der Form oder dem Oberflächenaspekt aufweisen.

29. System nach einem oder mehreren der vorhergehenden Ansprüche, **dadurch gekennzeichnet, dass** die Management- und Steuer- und Regeleinheit (3, 100) Ausführungsmittel (150) zum Bilden eines hochauflösenden endgültigen Bildes eines Produktes und/oder eines Arbeitsbereichs umfasst, beginnend von einer Vielzahl von erlangten Bildern von unterschiedlichen Teilen des Produktes und/oder des Arbeitsbereichs.

30. System nach einem oder mehreren der vorhergehenden Ansprüche, **dadurch gekennzeichnet, dass** die Management- und Steuer- und Regeleinheit (3, 100) Individuationsmittel (160) von mindestens einem Profil des zu bearbeitenden Produktes umfasst, beginnend von dem erlangten Bild, und Generierungsmittel von mindestens einem Pfad der robotisierten Ausrüstung (A) für das Bearbeiten des Profils.

31. System nach einem oder mehreren der vorhergehenden Ansprüche, **dadurch gekennzeichnet, dass** die Management- und Steuer- und Regeleinheit (3, 100) Qualitätsprüfungsmittel (170) zum Überprüfen der Oberfläche und maßlichen Qualität und des korrekten Zusammenbaus des Produktes umfasst, beginnend von dem erlangten Bild.

32. System nach Anspruch 31, **dadurch gekennzeichnet, dass** die Qualitätsprüfungsmittel (170) automatische und dynamische Maskierungsmittel (171) des erlangten Bildes umfassen, die zum Eliminieren des Bereichs außerhalb der Oberfläche, die das Produkt umgibt, und von allen Bereichen, die nicht von der Oberflächenprüfung ins Auge gefasst werden, von dem Bild geeignet ist.

33. System nach einem oder mehreren der vorhergehenden Ansprüche, **dadurch gekennzeichnet, dass** die Management- und Steuer- und Regeleinheit (3, 100) Erkennungs- und Identifikationsmittel (180) von Codes, Zeichen oder dergleichen auf dem Produkt umfasst, beginnend von dem erlangten Bild.

34. System nach einem oder mehreren der vorhergehenden Ansprüche, **dadurch gekennzeichnet, dass** die Management- und Steuer- und Regeleinheit (3, 100) Überprüfungsmittel (140) für die Außenabmessungen innerhalb des Arbeitsbereichs während des Aufnehmens der Produkte unter Verwendung einer robotisierten Ausrüstung umfasst, und beginnend von mindestens einem erlangten Bild.

35. System nach einem oder mehreren der vorhergehenden Ansprüche, **dadurch gekennzeichnet, dass** die Management- und Steuer- und Regeleinheit (3) Kontrollmittel (190) für das Vorhandensein von restlichen Gegenständen innerhalb des Arbeitsbereichs umfasst, beginnend von mindestens einem erlangten Bild.

36. Robotisiertes System (A, 1, 3) einschließlich einer robotisierten Ausrüstung (A) und einem System (1) zum künstlichen Sehen nach irgendeinem der vorhergehenden Ansprüche.

## Revendications

1. Système (1) de vision artificielle pour équipements robotisés, comprenant au moins une unité de visionnement (2) comprenant au moins une caméra (5), l'unité de visionnement (2) pouvant être associée à un équipement robotisé (A) et appropriée à acquérir au moins une image d'un produit situé à l'intérieur d'une zone de travail, et au moins une unité de gestion et de contrôle (3, 100) associée à ladite unité de visionnement et appropriée pour traiter ladite image acquise,
dans lequel ladite unité de gestion et de contrôle (3, 100) comprend des moyens de détection (111) pour détecter l'intensité de l'éclairage à l'intérieur de ladite zone de travail et des moyens de correction dynamique (111, 112) pour corriger les paramètres d'éclairage de ladite image à partir de ladite intensité d'éclairage détectée,
dans lequel ladite unité de visionnement (2) comprend des moyens de couplage/découplage rapide (23) audit et dudit équipement robotisé (A) comprenant au moins un premier raccordement (24), muni de contacts électriques (25) qui sont mécaniquement et électroniquement raccordables à au moins un second raccordement complémentaire (B) agencé sur ledit équipement robotisé (A),
**caractérisé en ce que** ladite unité de visionnement (2) comprend
une structure de support (4), pour supporter ladite au moins une caméra (5) comprenant au moins un compartiment de logement (14) servant à loger ladite caméra (5) et une portion sensiblement en forme de plaque (8), ledit compartiment de logement (14) étant défini par un cylindre de protection (15) associé à ladite portion sensiblement en forme de plaque (8) et comprenant au moins une plaque de fermeture (17) dudit compartiment (14),
dans lequel ledit cylindre de protection (15) comprend au moins un support d'ancrage (19) de ladite caméra (5) qui s'étend à l'intérieur dudit compartiment (14) à partir de ladite plaque de fermeture (17), et ladite plaque de fermeture (17) est attachée audit cylindre de protection (15) par l'intermédiaire de moyens de type fileté (21) permettant l'ajustement précis de l'inclinaison de ladite plaque de fermeture (17) par rapport au corps du cylindre de protection (15) et, par conséquent, permettant l'ajustement précis de l'inclinaison de la caméra (5) pour une acquisition correcte des images, et
dans lequel ladite unité de visionnement (2) comprend au moins une couche (20) en matière électromagnétique isolante qui est interposée entre ledit support d'ancrage (19) et ladite caméra (5).

2. Système (1) selon la revendication 1, **caractérisé en ce que** lesdits moyens de correction dynamique (111, 112) comprennent des moyens de comparaison (112) pour comparer les paramètres d'éclairage de ladite image acquise avec les paramètres d'éclairage d'une image de référence prédéfinie.

3. Système selon l'une ou plusieurs des revendications précédentes, **caractérisé en ce que** ladite unité de gestion et de contrôle (3, 100) comprend des moyens de reconstruction (113, 114, 115) pour reconstruire une image finale avec des paramètres d'éclairage optimaux d'un produit et/ou d'une zone de travail à partir d'une pluralité d'images dudit produit et/ou de ladite zone de travail acquises en variant lesdits paramètres d'éclairage.

4. Système selon la revendication 3, **caractérisé en ce que** lesdits moyens de reconstruction (113, 114, 115) comprennent des moyens de sélection (114) entre ladite pluralité d'images des parties dudit produit et/ou de ladite zone de travail avec des paramètres d'éclairage optimaux et des moyens de fusionnement (115) desdites parties sélectionnées pour définir ladite image finale.

5. Système selon l'une ou plusieurs des revendications précédentes, **caractérisé en ce que** lesdits paramètres d'éclairage comprennent au moins un parmi l'intensité de l'éclairage, le contraste et l'exposition.

6. Système selon l'une ou plusieurs des revendications précédentes, **caractérisé en ce que** lesdits moyens de détection sont du type d'un logiciel posemètre ou similaire.

7. Système selon l'une ou plusieurs des revendications précédentes, **caractérisé en ce que** ladite unité de visionnement comprend des moyens d'éclairage (6) pour éclairer ladite zone de travail.

8. Système selon la revendication 7, **caractérisé en ce que** lesdits moyens d'éclairage (6) comprennent une pluralité de dispositifs d'émission de la lumière (7) répartis selon un motif prédéfini sur ladite portion sensiblement en forme de plaque (8) de ladite structure de support (4).

9. Système (1) selon la revendication 7 ou 8, **caractérisé en ce que** lesdits moyens d'éclairage (6) comprennent des moyens d'ajustement pour ajuster la diffusion de la lumière à l'intérieur de ladite zone de travail.

10. Système selon la revendication 9, lorsqu'elle dépend de la revendication 8, **caractérisé en ce que** lesdits moyens d'ajustement pour ajuster la diffusion de la lumière comprennent des moyens de variation pour varier la position d'au moins l'un desdits dispositifs d'émission de la lumière (7).

11. Système selon la revendication 9 ou 10, lorsqu'elles dépendent de la revendication 8, **caractérisé en ce que** lesdits moyens d'éclairage (6) comprennent au moins une base sensiblement en forme de plaque (9) pour supporter au moins l'un desdits dispositifs d'émission de la lumière (7) et associée à ladite structure de support (2) pouvant tourner en rotation selon un angle prédéterminé.

12. Système (1) selon la revendication 11, lorsqu'elle dépend de la revendication 10, **caractérisé en ce que** lesdits moyens de variation, pour varier la position d'au moins l'un desdits dispositifs d'émission de la lumière (7), comprennent au moins un dispositif de calibration manuelle pour calibrer l'angle de rotation de ladite base en forme de plaque (9).

13. Système selon l'une ou plusieurs des revendications précédentes, lorsqu'elles dépendent de la revendication 8, **caractérisé en ce qu'**au moins l'un desdits dispositifs d'émission de la lumière (7) comprend une diode (11) pour émettre de la lumière ou similaire.

14. Système selon la revendication 13, **caractérisé en ce que** ladite diode (11) est à émission infrarouge.

15. Système selon l'une ou plusieurs des revendications précédentes, lorsqu'elles dépendent de la revendication 8, **caractérisé en ce qu'**au moins l'un desdits dispositifs d'émission de la lumière (7) comprend au moins une lentille de diffusion (12) de la lumière émise.

16. Système (1) selon la revendication 11, **caractérisé en ce que** ladite base en forme de plaque (9) comprend au moins un circuit imprimé pour le raccordement de l'alimentation et le soutien d'une pluralité de diodes électroluminescentes (11).

17. Système selon la revendication 1, **caractérisé en ce que** ledit compartiment de logement (14) comprend au moins une ouverture frontale (16) dans l'alignement de laquelle est positionnée l'objectif de ladite caméra (5).

18. Système selon la revendication 17, **caractérisé en ce que** ladite unité de visionnement (2) comprend au moins un filtre optique (22) agencé à ladite ouverture frontale (16).

19. Système selon l'une ou plusieurs des revendications précédentes **caractérisé en ce que** ladite couche (20) est réalisée en Bakélite ou similaire.

20. Système selon l'une ou plusieurs des revendications précédentes, lorsqu'elles dépendent de la revendication 8, **caractérisé en ce que** ledit cylindre de protection (15) de ladite caméra (5) est sensiblement orthogonal par rapport au plan de ladite portion en forme de plaque (8) de la structure support (4).

21. Système selon l'une ou plusieurs des revendications précédentes, **caractérisé en ce que** lesdits moyens d'ajustement précis sont du type fileté et comprennent au moins trois goujons (21).

22. Système selon la revendication 21, **caractérisé en ce que** lesdits moyens d'ajustement précis des moyens de type fileté comprennent au moins trois vis de serrage pour attacher lesdits goujons (21).

23. Système selon l'une ou plusieurs des revendications précédentes, **caractérisé en ce que** ladite unité de gestion et de contrôle (3) comprend au moins un dispositif d'interface (26) relié à ladite unité de visionnement (2) et approprié pour l'acquisition et le traitement d'images.

24. Système selon l'une ou plusieurs des revendications précédentes, **caractérisé en ce que** ladite unité de gestion et de contrôle (3) est du type d'un système à microprocesseur.

25. Système selon l'une ou plusieurs des revendications précédentes, **caractérisé en ce que** ladite unité de gestion et de contrôle (3) comprend des premiers moyens de reconnaissance (121) pour reconnaître le type et/ou la position d'une pluralité de produits sur un plan, à partir d'une image acquise bidimensionnelle, et des premiers moyens de détermination (122) pour déterminer les coordonnées d'au moins l'un desdits produits destiné à être soulevé et disposé par l'intermédiaire de l'équipement robotisé (A).

26. Système selon la revendication 25, **caractérisé en ce que** ladite unité de gestion et de contrôle (3) comprend des seconds moyens de reconnaissance (131) pour reconnaître le type et/ou la position d'une pluralité de produits disposés à l'intérieur d'une caisse, sur une palette ou similaire, à partir d'une image tridimensionnelle, et des seconds moyens de détermination (132) pour déterminer les coordonnées d'au moins l'un desdits produits destiné à être soulevé et disposé par l'intermédiaire de l'équipement robotisé (A).

27. Système selon la revendication 26, **caractérisé en ce que** lesdits seconds moyens de reconnaissance (131) comprennent des moyens de définition (133) de ladite image tridimensionnelle à partir d'au moins deux images bidimensionnelles acquises de ladite pluralité de produits.

28. Système selon la revendication 27, **caractérisé en ce qu'**au moins un parmi lesdits premiers et lesdits seconds moyens de reconnaissance (121, 131) comprennent des moyens d'identification de produits appartenant à la même famille, mais qui présentent des variations sensibles de forme ou d'aspect superficiel.

29. Système selon l'une ou plusieurs des revendications précédentes, **caractérisé en ce que** ladite unité de gestion et de contrôle (3, 100) comprend des moyens de réalisation (150) pour construire une image finale de haute résolution d'un produit et/ou d'une zone de travail à partir d'une pluralité d' images acquises de différentes parties dudit produit et/ou de ladite zone de travail.

30. Système selon l'une ou plusieurs des revendications précédentes, **caractérisé en ce que** ladite unité de gestion et de contrôle (3, 100) comprend des moyens de différenciation (160) d'au moins un profil dudit produit à travailler à partir de ladite image acquise et des moyens de génération d'au moins une trajectoire dudit équipement robotisé (A) pour travailler ledit profil.

31. Système selon l'une ou plusieurs des revendications précédentes, **caractérisé en ce que** ladite unité de gestion et de contrôle (3, 100) comprend des moyens d'inspection de la qualité (170) pour inspecter la qualité de la surface et la qualité dimensionnelle et l'assemblage correct dudit produit à partir de ladite image acquise.

32. Système selon la revendication 31, **caractérisé en ce que** lesdits moyens d'inspection de la qualité (170) comprennent des moyens de masquage automatique et dynamique (171) de ladite image acquise appropriés pour éliminer de l'image la zone en dehors d'une surface de bordure dudit produit et de toutes les zones non envisagées par le contrôle de la surface.

33. Système selon l'une ou plusieurs des revendications précédentes, **caractérisé en ce que** ladite unité de gestion et de contrôle (3, 100) comprend des moyens de détection et d'identification (180) de codes, de caractères ou similaire sur ledit produit à partir de ladite image acquise.

34. Système selon l'une ou plusieurs des revendications précédentes, **caractérisé en ce que** ladite unité de gestion et de contrôle (3, 100) comprend des moyens de contrôle (140) des dimensions globales à l'intérieur de ladite zone de travail lors du soulèvement des produits par l'intermédiaire d'un équipement robotisé et à partir d'au moins une image acquise.

35. Système selon l'une ou plusieurs des revendications précédentes, **caractérisé en ce que** ladite unité de gestion et de contrôle (3) comprend des moyens de contrôle (190) de la présence de objets résiduels à l'intérieur de ladite zone de travail à partir d'au moins une image acquise.

36. Un système robotisé (A, 1, 3) comprenant un équipement robotisé (A) et un système (1) de vision artificielle selon l'une quelconque des revendications précédentes.
